(19) Europäisches Patentamt
European Patent Office
Office européen des brevets

(11) **EP 0 900 907 A2**

(12) **EUROPÄISCHE PATENTANMELDUNG**

(43) Veröffentlichungstag:
    **10.03.1999 Patentblatt 1999/10**

(51) Int. Cl.⁶: **E06B 3/96**, B29C 65/02

(21) Anmeldenummer: 98116040.1

(22) Anmeldetag: **25.08.1998**

(84) Benannte Vertragsstaaten:
    **AT BE CH CY DE DK ES FI FR GB GR IE IT LI LU MC NL PT SE**
    Benannte Erstreckungsstaaten:
    **AL LT LV MK RO SI**

(30) Priorität: **08.09.1997 DE 19739252**

(71) Anmelder:
    **RAPID MASCHINENBAU GmbH**
    **72131 Ofterdingen (DE)**

(72) Erfinder: **Bliestle, Jochen**
    **72379 Hechingen (DE)**

(74) Vertreter:
    **Wunderlich, Rainer, Dipl.-Ing. et al**
    **Patentanwälte**
    **Weber & Heim**
    **Irmgardstrasse 3**
    **81479 München (DE)**

(54) **Verfahren zum Bearbeiten von zu verschweissenden Hohlkammerprofilen mit Gummidichtung**

(57)    Die Erfindung betrifft ein Verfahren zum Bearbeiten von zu verschweißenden Hohlkammerprofilen (15,15',16,16') mit Gummidichtung (3). Dabei wird ein zusätzlicher Verfahrensschritt eines Kürzens oder Durchtrennens der Gummidichtung (3) und gegebenenfalls eines eine T-Nut aufweisenden Teils des Hohlkammerprofilkörpers an einer durch eine vorbestimmte Länge des abzulängenden Hohlkammerprofils definierten Stelle durchgeführt. Ein zu kürzendes Maß A steht zu einer Größe einer vorgesehenen Schweißzugabe B in einer Beziehung $A = B \sin \alpha$, wobei $\alpha$ ein Schnittwinkel ist. Die Verfahrensschritte des eigentlichen Ablängens und des Kürzens können auf einer oder getrennten Maschinen durchgeführt werden.

FIG. 3a

EP 0 900 907 A2

## Beschreibung

Die Erfindung betrifft ein Verfahren zum Bearbeiten von zu verschweißenden Hohlkammerprofilen mit Gummidichtung gemäß dem Oberbegriff der unabhängigen Ansprüche 1 und 2.

Zur Herstellung von Türen oder Fensterrahmen werden seit einigen Jahren Hohlkammerprofile mit Gummidichtung verwendet, bei welchen die Gummidichtung in einem hierfür am Hohlkammerprofilkörper vorgesehenen Kanal eingezogen oder bei der Profilherstellung extrudiert wird. Der Hohlkammerprofilkörper besteht aus einem leicht zu bearbeitenden Material, vorzugsweise thermoplastischem Kunststoff oder Aluminium. Die Gummidichtungen sind aus einem weichen Gummi gefertigt.

Bei der Herstellung von Fenstern aus Kunststoff werden die den Rahmen bildenden horizontalen und die vertikalen Seitenteile zunächst als Einzelstücke gefertigt, d.h. auf Gehrung abgelängt und dann an ihren Endstellen miteinander verschweißt, wodurch sich sogenannte "Schweißnähte" bilden.

Durch das Verschweißen wird die Länge eines Hohlkammerprofils kleiner. Um diesen Längenverlust zu kompensieren, wird eine Schweißzugabe auf das gewünschte Fertigmaß der Hohlkammerprofile addiert, damit das Hohlkammerprofil nach dem Verschweißen die richtige Länge aufweist.

Das Verschweißen der einzelnen Schenkel erfolgt mittels besonderer Schweißmaschinen, mit denen je nach Maschinentyp entweder zwei oder vier Stellen gleichzeitig miteinander verschweißt werden können. Hierfür werden die Verbindungsflächen der zu verschweißenden Hohlkammerprofile unter Druck angeglichen, bis sie vollflächig anliegen. Danach erfolgt das Anwärmen. Dabei werden die Verbindungsflächen auf die Schweißtemperatur erwärmt und eine ausreichend tiefe Schmelze gebildet. Nach Ablauf der Anwärmzeit werden die beiden plastifizierten Enden der Profile unter einem vorbestimmten Fügedruck zusammengefügt. Das Verschweißen der Hohlkammerprofile zu einem Fenster erfolgt ohne Zugabe von Werkstoff. Das Material, das bei der Länge eines abgelängten Profils als Schweißzugabe berücksichtigt ist, bildet die Schweißnaht.

Obwohl der Fügedruck unter Berücksichtigung von Schmelzviskosität des Materials und Fügefläche des Hohlkammerprofils an den Maschinen einstellbar ist, kann durch die unterschiedlichen Materialien der Gummidichtung und des Hohlkammerprofils sowie durch die Schweißzugabe am abgelängten Profil eine Wulst entstehen.

Da das Hohlkammerprofil und die Gummidichtung aus unterschiedlichen Materialien bestehen, die sich bei der Bearbeitung, beispielsweise bei einem Ablängen auf Sägeautomaten, unterschiedlich verhalten, wird häufig eine schlechte Qualität der Schnittflächen, insbesondere bei 45°-Schnitten (Gehrungsschnitt) erzielt.

Die beim Ablängen gewählte Vorschubgeschwindigkeit des Sägeblatts und die Geometrie der Schneidezähne des Sägeblatts richten sich im wesentlichen nach dem Material des harten, formstabilen Hohlkammerprofils. Beim Schneiden und vor allem beim Austritt des Sägeblatts aus der weichen, elastisch verformbaren Gummidichtung, insbesondere an dem sich verjüngenden Ende der Gummidichtung, führt der horizontale oder vertikale Vorschub dazu, daß die Gummidichtung anfängt, sich zu bewegen und durch den gleichbleibend schnellen Vorschub ausreißt, wodurch eine schlechte Qualität der Schnittfläche an der Gummidichtung erzielt wird.

Diese schlechte Qualität der Schnittflächen wirkt sich besonders nachteilig bei der Weiterverarbeitung, beispielsweise beim Verschweißen der abgelängten Profile zu einem Rahmen, aus. Eine ausgerissene und über die Schnittfläche herausragende Gummidichtung bewirkt die Entstehung einer unerwünschten Materialansammlung oder Wulst an der Verbindungsnaht der Profile beim Verschweißen, was zu einer Qualitätsminderung des Endprodukts führt.

Es ist daher die **Aufgabe** der Erfindung, ein einfaches und kostengünstiges Verfahren zu schaffen, durch welches beim Verschweißen von Hohlkammerprofilen mit Gummidichtung glatte Verbindungsnähte und eine insgesamt verbesserte Qualität des Endproduktes erzielt werden können.

Erfindungsgemäß wird diese Aufgabe für ein gattungsgemäßes Verfahren durch die kennzeichnenden Merkmale sowohl des Anspruchs 1 als auch des Anspruchs 2 gelöst.

Weitere Ausführungsformen ergeben sich aus den unabhängigen Ansprüchen.

Der Erfindung liegt zum einen der Grundgedanken zugrunde, das Hohlkammerprofil vor dem Verfahrensschritt des Verschweißens so weit zu bearbeiten, daß die Gummidichtung nicht mit der Schnittfläche durch das Hohlkammerprofil abschließt, sondern so weit zurückgesetzt ist, daß beim Verschweißen der Hohlkammerprofile zu einem Rahmen im wesentlichen nur der Hohlkammerprofilkörper verschweißt wird.

Zur Lösung der oben genannten Aufgabe ist alternativ vorgesehen, daß vor einem Ablängen des Hohlkammerprofiles die Gummidichtung mittels Schneiden oder Stanzen an einer definierten Stelle zumindest teilweise durchtrennt wird und daß anschließend das Ablängen des Hohlkammerprofiles mittels Sägen erfolgt, wobei die Gummidichtung an der vorausgehend bearbeiteten definierten Stelle mit einer nahezu glatten Trennfläche abgetrennt und vorzugsweise der abgetrennte, überschüssige Teil der Gummidichtung beim Sägen abgeführt wird.

Durch dieses erfindungsgemäße Verfahren wird trotz eines Ablängens des Hohlkammerprofiles mittels einer Säge eine im wesentlichen glatte, saubere Trennfläche an der Weichstoffdichtung erreicht. Durch das Schneiden oder Stanzen wird die Gummidichtung ganz oder zumindest in einem solchen Umfang durchtrennt, daß beim nachfolgenden Sägeschritt aufgrund der auftretenden Scherkräfte die Gummidichtung an der Schnitt- oder Perforationsstelle definiert abreißt. Hierbei können einfache Messer oder Stanzwerkzeuge eingesetzt werden, die beispielsweise in die Aufnahme- oder Befestigungsnut der Gummidichtung am Hohlkammerprofil eingefahren werden können.

Erfindungsgemäß ist bevorzugt, daß die definierte Stelle, an der die Gummidichtung zumindest teilweise durchtrennt wird, mit einer Stelle des Ablängens des Hohlkammerprofiles übereinstimmt oder um ein Maß dazu zurückgesetzt ist. Es hat sich überraschenderweise herausgestellt, daß in dem Fall, in welchem der Sägeschnitt an genau derselben Stelle wie der vorausgehende Trennschnitt an der Gummidichtung erfolgt ist, keine wesentliche Ausfransung an der Gummidichtung beim Sägen entsteht. Die vorausgehend zu bearbeitende Schnittstelle kann jedoch auch um ein bestimmtes Maß zu der nachfolgenden Sägung versetzt sein, da aufgrund der Materialeigenschaften einer Gummi- oder Weichstoffdichtung und der auftretenden Scherkräfte noch ein definierter Abriß der Gummidichtung erreicht wird, wenn die Schnittstelle zur nachfolgenden Sägestelle um einige Millimeter versetzt ist.

Erfindungsgemäß wird ein Verfahren zum Ablängen von Hohlkammerprofilen vorgesehen, bei welchem ein zusätzlicher Verfahrensschritt eines Kürzens der Gummidichtung an einer durch eine vorbestimmte Länge des abzulängenden Hohlkammerprofils definierten Stelle um ein Maß A durchgeführt wird, welches zu einer Größe einer zur Kompensation des Längenverlusts beim Verschweißen vorgesehenen Schweißzugabe B in einer Beziehung:

A = B sin α steht, wobei α ein Schnittwinkel ist.

Durch das Kürzen der Gummidichtung wird sichergestellt, daß beim Verschweißen im Bereich der plastifizierten Enden der Hohlkammerprofile im wesentlichen nur die Hohlkammerprofilkörper verschweißt werden.
Auf diese Weise kann eine undefinierte Wulstbildung aufgrund ausgefranster Schneidflächen an der Gummidichtung einfach und effizient vermieden werden.
Zweckmäßigerweise ist erfindungsgemäß vorgesehen, daß das Kürzen oder Durchtrennen der Gummidichtung durch Ausstanzen, Ausfräsen, Einschneiden oder Einstanzen unmittelbar vor oder nach dem Verfahrensschritt des Ablängens der Hohlkammerprofile auf das zum Verschweißen erforderliche Längenmaß auf derselben Maschine durchgeführt wird.
Zu diesem Zweck kann an einem Sägeautomaten an jedem Sägeaggregat eine Bearbeitungseinheit vorgesehen werden, welche den zusätzlichen Verfahrensschritt des Ausstanzens, Ausfräsens, Einschneidens oder Ausstanzens durchführt. Diese Bearbeitungseinheit wird so angeordnet, daß eine Verfahrensschrittfolge möglich ist, bei der der Sägeautomat zunächst auf die Zuschnittposition eingestellt wird, dann die Ausstanzung der Gummidichtung durchgeführt und anschließend das Hohlkammerprofil abgelängt wird. Von besonderem Vorteil bei einer derartigen Anordnung ist, daß die beiden Verfahrensschritte des Aus- oder Einstanzens der Gummidichtung und des Ablängens der Hohlkammerprofile in der gleichen definierten Lage der Hohlkammerprofile auf der Richtfläche des Sägeautomaten durchgeführt werden. Eventuelle Ungenauigkeiten der Bearbeitung infolge mehrfachen Positionierens des zu bearbeitenden Werkstücks werden vermieden.

Das Vorsehen einer Durchführung beider Verfahrensschritte auf der gleichen Maschine ist auch dadurch vorteilhaft, daß die Reihenfolge der aufeinanderfolgenden Verfahrensschritte geändert werden kann, beispielsweise, wenn ein nachträgliches Kürzen der Gummidichtung im Bereich der Schnittfläche erforderlich sein könnte. Die ursprünglich festgesetzten und eingestellten Positionsdaten für Werkstück und Werkzeuge können problemlos nachvollzogen werden, um eine eventuell erforderliche Nachbearbeitung mit hoher Genauigkeit durchführen zu können.
In einer weiteren zweckmäßigen Ausführungsform des erfindungsgemäßen Verfahrens wird das Kürzen der Gummidichtung durch Ausstanzen oder Ausfräsen vor oder nach dem Verfahrensschritt des Ablängens der Hohlkammerprofile auf das zum Verschweißen erforderliche Längenmaß auf getrennten Maschinen durchgeführt. Dadurch können Maschinenzeiten für vorhandene nicht ausgelastete Maschinen besser genutzt werden, wenn keine Nachrüstung eines Sägeautomats gewünscht wird.
Die Abstimmung der Einstelldaten für die Positionen der Werkstücke und Werkzeuge zueinander an den jeweiligen Maschinen kann über einen zentralen Rechner erfolgen, so daß die Präzision der Bearbeitung sichergestellt ist.
Eine weitere besonders vorteilhafte Ausführungsform des erfindungsgemäßen Verfahrens sieht vor, daß das Kürzen oder Durchtrennen der Gummidichtung in einen automatischen Verfahrensablauf über eine speicherprogrammierbare Steuerung aufnehmbar ist.
Dies ist erfindungsgemäß besonders bei Sägeautomaten von Vorteil, die mit automatischen Zuführeinrichtungen zur Zuführung von Hohlkammerprofilstäben sowie ausgangsseitig mit Einrichtungen zur Entnahme oder Ablage der auf das erforderliche Längenmaß abgelängten Hohlkammerprofile versehen sind.
Nachfolgend wird die Erfindung anhand von Zeichnungen genauer erläutert. Im einzelnen zeigen die schematischen Darstellungen in

Fig. 1 eine schematische Querschnittsansicht eines zur Herstellung von Fensterrahmen verwendeten Hohlkammerprofils mit Gummidichtung;

Fig. 2a eine schematische Darstellung von auf Gehrung geschnittenen zu einem Rahmen zusammenzufügenden Hohlkammerprofilen mit nicht bearbeiteter Gummidichtung, in unverschweißtem Zustand;

Fig. 2b eine schematische Darstellung eines durch Verschweißen der in Fig. 2a gezeigten Hohlkammerprofile erzeugten Rahmens, wobei die an den Schweißnähten gebildeten Wülste erkennbar sind;

Fig. 3a eine schematische Darstellung von auf Gehrung geschnittenen Hohlkammerprofilen mit erfindungsgemäß bearbeiteten Gummidichtungen in unverschweißtem Zustand;

Fig. 3b eine schematische Darstellung eines durch Verschweißen der in Fig. 3a gezeigten Hohlkammerprofile erzeugten Rahmens, mit glatten Schweißnähten;

Fig. 4 eine schematische Darstellung eines Endbereichs eines auf Gehrung geschnittenen Hohlkammerprofils mit gekürzter Gummidichtung im Bereich der Schweißzugabe; und

Fig. 5 eine schematische Darstellung eines Hohlkammerprofils mit Gummidichtung, bei welcher der Verfahrensschritt des Ausstanzens der Gummidichtung vor dem eigentlichen Ablängen auf eine vorbestimmte Länge erfolgt.

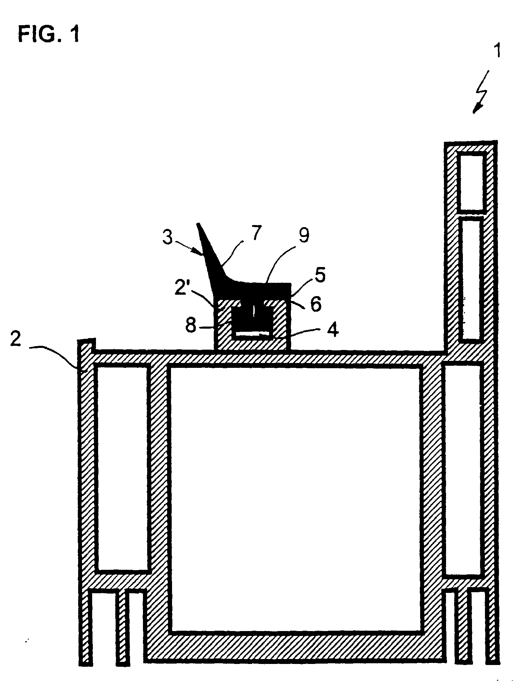

Ein in Fig. 1 im Querschnitt schematisch dargestelltes Hohlkammerprofil 1 besteht aus einem ca. 6 m langen Hohlkammerprofilkörper 2 aus thermoplastischem Kunststoff oder Aluminium und einer Gummidichtung 3, deren unterer Teil 8 in einer entlang dem Hohlkammerprofilkörper 2 verlaufenden T-Nut 4 eingezogen oder am Hohlkammerprofilkörper 2 anextrudiert ist. Wenn die Gummidichtung 3 eingezogen ist, liegt sie mit einer unteren Seite 5 ihres oberen Teils 9 vollflächig an einer Fläche 6 des die T-Nut 4 aufweisenden Haltebereichs 2' an und ein sich verjüngender Teil 7 ragt frei über den Haltebereich 2'.

Bei der erfindungsgemäßen Bearbeitung wird der die T-Nut 4 aufweisende Haltebereich 2', der in der T-Nut 4 eingezogene untere Teil 8 sowie der obere Teil 9 einschließlich der sich verjüngende Teil 7 der Gummidichtung 3 oder eine am Hohlkammerprofilkörper 2 anextrudierte Gummidichtung im Bereich der Schweißzugabe an der Schnittfläche so entfernt , daß praktisch nur der Hohlkammerprofilkörper 2 plastifiziert und verschweißt wird.

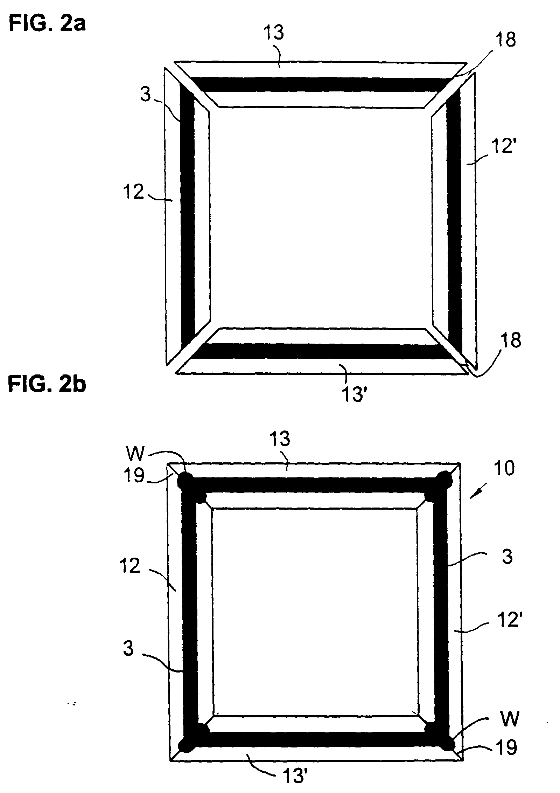

Bei der Herstellung eines in Figur 2b schematisch dargestellten Rahmens 10 werden die in Fig. 2a gezeigten und zum Rahmen zusammenzufügenden vertikalen Seitenleisten 12, 12' und horizontalen Seitenleisten 13, 13' nach einem herkömmlichen Verfahren als Einzelstücke gefertigt, indem sie auf eine einer jeweiligen Rahmengröße entsprechende Länge zuzüglich einer an jedem Ende vorgesehenen Schweißzugabe B auf Gehrung abgelängt werden. Das Zusammenfügen der Seitenleisten 12, 12', 13, 13' erfolgt im allgemeinen mit Schweißmaschinen, mit denen zwei oder vier Verbindungsflächen 18 gleichzeitig verschweißt werden können. Dabei werden die Verbindungsflächen 18 über eine vorbestimmte Zeit auf die Schweißtemperatur erwärmt und anschließend unter einem Fügedruck unter Bildung von Schweißnähten 19 zusammengefügt. Die im Bereich der Schweißzugabe vorhandene und beim Sägen stark ausgefranste Gummidichtung 3 wird beim Verschweißen der Seitenleisten 12, 12', 13, 13' mit erhitzt und bildet im Bereich der verschweißten Verbindungsflächen 18 Schweißnähte 19 mit undefinierten Wülsten W, die die Qualität des Rahmens als Endprodukt beeinträchtigen können.

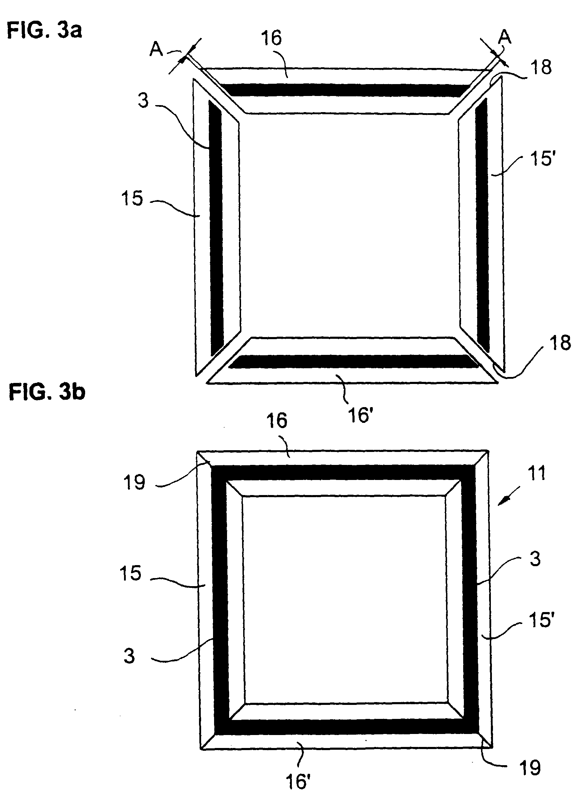

Bei der Herstellung eines wie in Fig. 3b schematisch dargestellten Rahmens 11 werden die zum Rahmen 11 zusammenzufügenden vertikalen Seitenleisten 15, 15' und die horizontalen Seitenleisten 16, 16' auch auf Gehrung abgelängt, wie vorangehend beschrieben wurde. Vor dem Verschweißen erfolgt jedoch in einem zusätzlichen Verfahrensschritt ein Kürzen durch Ausstanzen oder Fräsen der Gummidichtung 3 und des die T-Nut 4 aufweisenden Bereichs 2' an jedem Ende um ein Maß A, welches der Schweißzugabe B sin 45° entspricht. Die Verbindungsflächen 18 können nun auf eine entsprechende Temperatur erwärmt werden, um durch Verpressen die Schweißnähte 19 zu bilden, die jedoch in diesem Fall glatt sind, da im Bereich der Schweißzugabe die Gummidichtung 3 und der komplette die T-Nut 4 aufweisende Bereich 2' entfernt wurden.

Das Verschweißen der Hohlkammerprofile zu einem Rahmen erfolgt ohne Zugabe von Werkstoff. Das Material, das als Schweißzugabe B im abgelängten Hohlkammerprofil vorhanden ist, bildet die Schweißnaht 19.

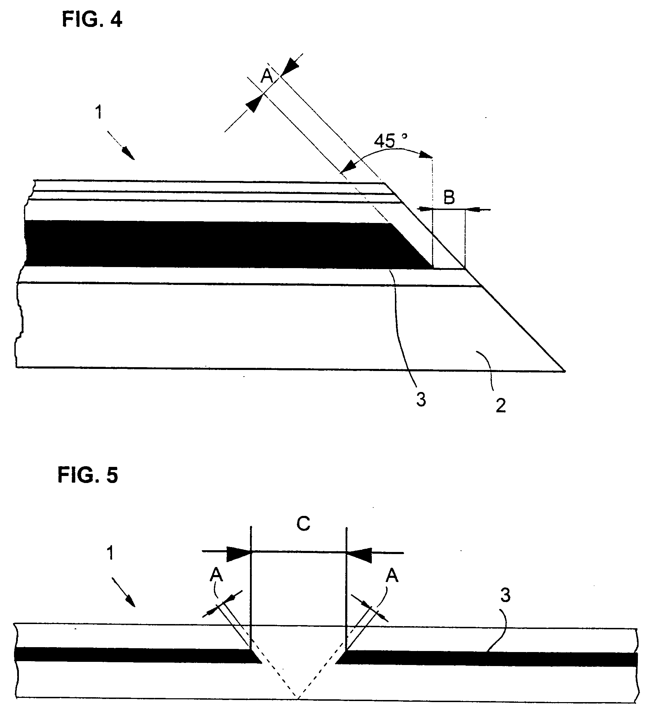

In Figur 4 ist eine Detailansicht einer auf Gehrung geschnittenen Seitenleiste 16' gezeigt, bei welcher eine Kürzung der Gummidichtung 3 und des die T-Nut 4 aufweisenden Haltebereiches 2' nach der Ausführung eines Gehrungsschnitts vorgenommen wurde. Darin ist A das Maß, um welches die Kürzung im Bereich der vorgesehenen Schweißzugabe B vorgenommen wurde.

In Figur 5 ist beispielhaft schematisch dargestellt, wie eine Ausstanzung der Gummidichtung 3 und des die T-Nut 4 aufweisenden Haltebereiches 2' an einem Hohlkammerprofil 1 vor dem Verfahrensschritt des Ablängens auf eine vorbestimmte Länge erfolgt. Das Maß C stellt hier die Größe der Ausstanzung oder Ausfräsung der Grummidichtung 3 und des die T-Nut 4 aufweisenden Haltebereiches 2' dar. Bei diesem Maß muß berücksichtigt werden, daß das Hohlkammerprofil 1 noch auf Gehrung durchgesägt werden muß, so daß das Maß A eingehalten wird.

Das Einstellen der Schnittdaten an einer zur Durchführung des Verfahrensschritts des Kürzens der Gummidichtung 3 sowie des Bereiches 2' verwendeten Stanzmaschine sowie eines zur Durchführung des Verfahrensschritts des Ablängens verwendeten Sägeautomats erfolgt über einen zentralen Rechner, so daß die Präzision der Bearbeitung gewährleistet ist und die Schnittflächen für den anschließenden Verfahrensschritt des Verschweißens entsprechend vorbereitet sind, um glatte Schweißnähte 19 zu erzielen.

**Patentansprüche**

1. Verfahren zum Bearbeiten von zu verschweißenden Hohlkammerprofilen (1) mit Gummidichtung (3), welche in einem Haltebereich (2') des Hohlkammerprofiles (1) angeordnet ist, wobei das Hohlkammerprofil (1) vor einem Verschweißen auf eine vorbestimmte Länge abgelängt wird, dadurch **gekennzeichnet**, daß ein Verfahrensschritt eines Kürzens der Gummidichtung (3) und des Haltebereichs (2'), welcher insbesondere eine T-Nut (4) aufweist, um ein Maß (A) gegenüber der vorbestimmten Länge des abzulängenden Hohlkammerprofils (1) durchgeführt wird.

2. Verfahren zum Bearbeiten von zu verschweißenden Hohlkammerprofilen (1) mit Gummidichtung (3), welche in einem Haltebereich (2') des Hohlkammerprofiles (1) angeordnet ist, wobei das Hohlkammerprofil (1) vor einem Verschweißen auf eine vorbestimmte Länge abgelängt wird, dadurch **gekennzeichnet**, daß vor einem Ablängen des Hohlkammerprofiles (1) die Gummidichtung (3) mittels Schneiden oder Stanzen an einer definierten Stelle zumindest teilweise durchtrennt wird und daß anschließend das Ablängen des Hohlkammerprofiles (1) mittels Sägen erfolgt, wobei die Gummidichtung (3) an der vorausgehend bearbeiteten definierten Stelle mit einer nahezu glatten Trennfläche abgetrennt wird.

3. Verfahren nach Anspruch 2, dadurch **gekennzeichnet**, daß die definierte Stelle, an der die Gummidichtung (3) zumindest teilweise durchtrennt wird, mit einer Stelle des Ablängens des Hohlkammerprofiles (1) übereinstimmt oder um ein Maß (A) dazu zurückversetzt ist.

4. Verfahren nach Anspruch 1 oder 3, dadurch **gekennzeichnet**, daß das Maß (A) zu einer Größe einer vorgesehenen Schweißzugabe (B) in einer Beziehung:

$A = B \sin \alpha$ steht, wobei $\alpha$ ein Schnittwinkel ist.

5. Verfahren nach Anspruch 1 oder 4, dadurch **gekennzeichnet**, daß der Verfahrensschritt des Kürzens der Gummidichtung (3) und des die T-Nut (4) aufweisenden Haltebereichs (2') durch Ausstanzen oder Ausfräsen vor oder nach einem Verfahrensschritt eines Ablängens des Hohlkammerprofils (1) auf ein zum Verschweißen erforderliches Längenmaß auf einer einzigen Maschine durchgeführt wird.

6. Verfahren nach einem der Ansprüche 1 bis 4, dadurch **gekennzeichnet**, daß der Verfahrensschritt des Kürzens der Gummidichtung (3) und gegebenenfalls des die T-Nut (4) aufweisenden Haltebereiches (2') und der Verfahrensschritt des Ablängens der Hohlkammerprofile (1) auf ein zum Verschweißen erforderliches Längenmaß auf getrennten Maschinen durchgeführt werden.

7. Verfahren nach einem der Ansprüche 1 bis 6, dadurch **gekennzeichnet**, daß der Verfahrensschritt des Kürzens der Gummidichtung (3) und gegebenenfalls des die T-Nut (4) aufweisenden Haltebereiches (2') in einem automatischen Verfahrensablauf des Ablängens von Hohlkammerprofilen (1) über eine speicherprogrammierbare Steuerung aufnehmbar ist.

FIG. 1

**FIG. 2a**

**FIG. 2b**

FIG. 3a

FIG. 3b

**FIG. 4**

**FIG. 5**